# EUROPEAN PATENT SPECIFICATION

(11) **EP 3 360 733 B1**
(45) Date of publication and mention of the grant of the patent: **09.10.2019**
(21) Application number: 17155360.5
(22) Date of filing: 09.02.2017
(51) Int. Cl.: B60R 21/201, B60R 21/217

(54) **AIRBAG MODULE WITH A CONTAINER AND A FLEXIBLE COVER**
AIRBAGMODUL MIT EINEM BEHÄLTER UND EINER FLEXIBLEN ABDECKUNG
MODULE DE COUSSIN GONFLABLE DOTÉ D'UN CONTENANT ET D'UN COUVERCLE SOUPLE

(43) Date of publication of application: 15.08.2018
(73) Proprietor: Autoliv Development AB, 447 83 Vårgårda (SE)
(72) Inventor: GUIBERT, Hervé, 76360 Barentin (FR); HELLOT, Laurent, 76220 La Feuille (FR)
(74) Representative: Schön, Thilo

(56) References cited:
- DE-A1- 19 940 360
- DE-A1-102014 005 099
- JP-A- 2015 123 763
- US-A1- 2008 030 008
- US-A1- 2011 049 850

## Description

The invention relates to an airbag module according to the preamble of claim 1.

Especially frontal airbags such as so called passenger frontal airbags and driver frontal airbags usually comprise a container made of a rigid material such as a plastic material or metal, an inflator attached to this container, an airbag package being at least partially located in an accommodation space provided by the container and a cover closing the deployment opening of the container and holding the airbag package in the accommodation space. This cover can also be made of a rigid material but it is also known in the art to use a flexible cover which can be made of a textile material, especially a woven material, or a foil. When the inflator is triggered and the airbag starts to deploy this flexible cover breaks or ruptures so that the airbag can deploy out of the container.

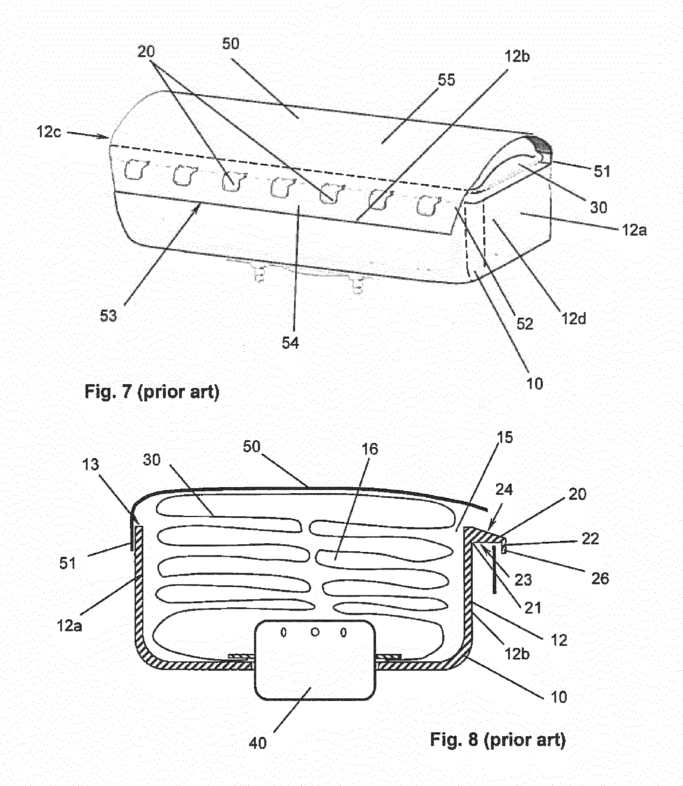

Various techniques for attaching the flexible cover to the container are known, for example the flexible cover can be glued or welded to the container. Figure 7 shows a design which is very common today. The container has a side wall whose upper edge encircles a deployment opening. Often (and as is shown) the deployment opening is basically rectangular such that the side wall has four sections. The container encloses an accommodation space (which is open at the deployment opening) and an airbag package is partially located in this accommodation space but extends partially out of the deployment opening. A flexible cover extends over the deployment opening such that it holds the airbag package in its position relative to the container. The flexible cover has a first end section which is attached to a first side wall section of the side wall, for example by gluing, welding or other suitable techniques. A protrusion in form of a hook extends from the second side wall section being opposite the first side wall section. This hook-shaped protrusion has a container-side end and a free end.

The flexible cover comprises a hole for that protrusion and in the mounted state shown in Figure 7 the protrusion (hook) extends through this hole such that both end sections of the flexible cover are fastened to the container. The hook-shaped protrusion has a surface pointing away from the deployment opening. This surface is referred to as the retaining surface because the edge of the hole distal from the deployment opening (referred to as retained edge) is retained by this surface. Usually more than one hook-hole-pair is present, as shown in Figure 7. An airbag module of this type is lightweight, reliable and cost effective.

From generic JP 2015 123763 A a side airbag module with a chute-shaped rigid element which forms a sort of a housing is known. This housing partially encircles a rolled airbag package. Straps extend around this housing and the airbag package in a basically circular way in order to keep the airbag package in shape and in order to secure it to the housing. One hook-free protrusion for each strap extends from this housing and each strap comprises two holes through which the protrusion extends.

It is the task of the present invention to further improve an airbag module of the generic type.

This task is solved by an airbag module according to claim 1.

The at least one protrusion is not hook-shaped. That means that the retaining surface extends substantially barrier-free to the free end of the protrusion. By this measure less force is needed when closing the flexible cover and/or a tighter package of the airbag can be achieved such that space is saved. The effect is best if the retaining surface extends to the free end completely barrier-free and so this is preferred.

According to the invention at least one additional securing protrusion being differently orientated than the protrusion and a matching securing hole in the flexible cover in order to avoid the protrusion from slipping out of the hole are provided.

The invention will now be described in detail by means of a preferred embodiment in view of the drawings.

The Figures show:
- Figure 1: a preferred embodiment of the inventive airbag module in a schematic cross sectional view in a state in which the flexible cover is not yet closed,
- Figure 2: what is shown in Figure 1 in a plan view from direction R1 in Figure 1,
- Figure 3: what is shown in Figure 2 in a plan view from direction R2 in Figure 2,
- Figure 4: what is shown in Figure 1 in a subsequent manufacturing step,
- Figure 5: what is shown in Figures 1 and 4 after the finishing of the manufacturing process,
- Figure 6: what is shown in Figure 5 in a view according to Figure 3,
- Figure 7: a prior art airbag module of the generic type in a detailed representation,
- Figure 8: the airbag module of Figure 7 in a schematic representation according to Figure 5,
- Figure 9: the prior art airbag module of Figure 8 in a state according to Figure 1,
- Figure 10: what is shown in Figure 9 in a mounting state according to Figure 4,
- Figure 11: what is shown in Figure 10 in a subsequent mounting state, and
- Figure 12: the completely manufactured airbag module of Figures 9 to 11 in a representation according to Figure 5.

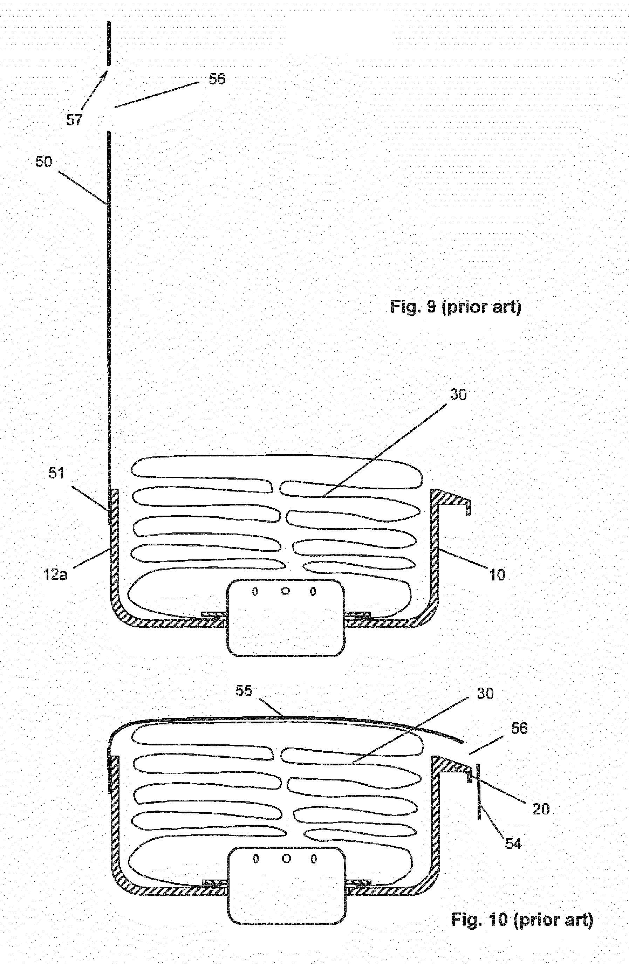

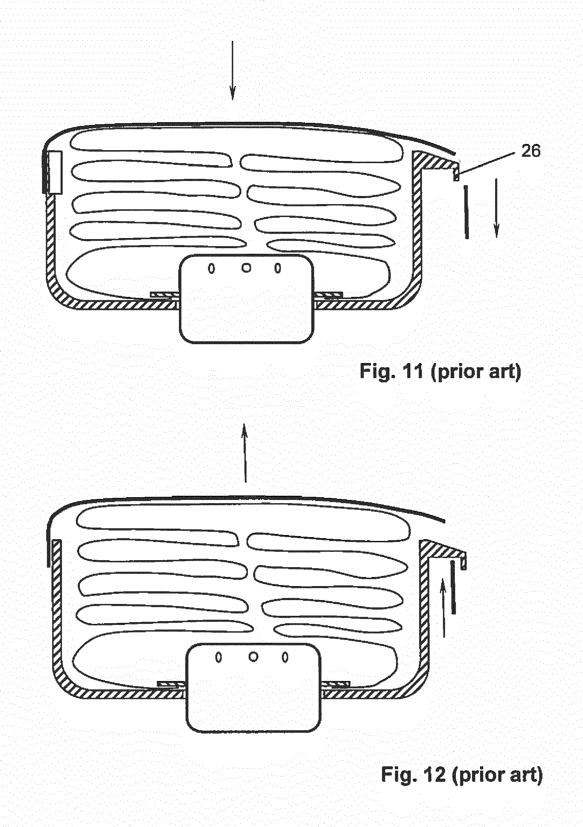

First a generic prior art airbag module will be described in view of Figures 7 to 12. It is believed that this helps to better understand the invention. All these figures show the same airbag module but Figure 7 is quite detailed whereas Figures 9 to 12 are schematic cross sections. First, reference is made to Figures 7 and 8:
As has already been briefly discussed the airbag module comprises a container 10, an airbag package 30, an inflator (usually in form of a gas generator) 40 attached to the container 10 and a flexible cover 50 being attached to the container.

The container 10 has basically the shape of a cuboid and comprises a side wall 12 with four side wall sections 12a, 12b, 12c and 12d and a bottom 14. The four side wall sections define an upper edge 13 which is basically rectangular. This upper edge 13 encircles a deployment opening 15. The side wall 12 and the bottom 14 define an accommodation space 16. A rolled and / or folded airbag package 30 is partially located in this accommodation space 16 but extends through the deployment opening 15 such that a part of this airbag package 30 is located outside the container 10. The inflator 40 is attached to the bottom 14 of the container. In this embodiment the mounting flange of the inflator 40 also serves for holding the airbag 30 to the container 10 (but this is not mandatory).

A plurality of hook-shaped protrusions 20 extend from the second side wall section 12b of the container 10. In the embodiment shown these hook-shaped protrusions 20 extend from the upper edge of the second side wall section 12b. Each of this hook shaped protrusions 20 extends from a container side end 21 to a free end 22. Often the container 10 and the protrusions will be made in one piece but for the sake of linguistic clearness the protrusions are defined as extending from the container, because the container and the protrusions are functionally separate elements. The surface pointing away from the deployment opening 15 of each protrusion 20 is referred to as the retaining surface 23. These retaining surfaces 23 can especially be completely flat. Since the protrusions 20 are hook-shaped the retaining surfaces 23 do not extend to the respective free end 22 of the protrusion because a hook section 26 extends in a direction away from the deployment opening 15 at the free end 22. The upper surface 24 of each protrusion 20 is slanted in relation to the retaining surface 23.

The flexible cover 50 can be looked at as being comprised of the first end section 51 being connected to the first side wall section 12a, a second end section 52 for being connected to the second side wall section 12b (namely via the hook-shaped protrusions 20) and a covering section 55 located between the first end section and the second end section 52. A breaking line (for example in form of a perforation) can be present. This breaking line could for example extend along the entire width of the covering section 55. The second end section 52 comprises a hole 56 for each of the hook-shaped protrusions 20. Each of these holes 56 has an edge distal from the covering section 55. This edge is referred to as retained edge 57. The area of the end section 52 being located between the holes 56 and the end edge 53 is referred to as end area 54.

The final assembly step, namely the closing of the flexible cover 50 is now explained in view of Figures 9 to 12.

Figure 9 shows the state in which the airbag package 30 has already been placed in the accommodation space 16 of the container 10. As one can clearly see from Figure 9 the airbag package 30 extends out of the deployment opening 15. The first end section 51 of the flexible cover 50 is (here directly) attached to the first side wall section 12a. For example this first end section 51 can be glued or welded to this first side wall section 12a, but pure mechanical attachment methods like hooking or the like could also be used.

As can be seen from Figure 10 in a first step the covering section 55 of the flexible cover 50 is laid onto the airbag package 30. In this state the holes 56 are located basically above their respective hook-shaped protrusions 20.

Now a pulling force is applied to the end area 54 of the second end section 52. By doing so the airbag package 30 is compressed until for each protrusion-hole-pair the retained edge 57 is located "under" the lower edge of the hook section 26. The expressions "under" is to be understood in relation to the orientation shown in the figures which will often be the real life mounting orientation. Now, the second end section 52 can be moved towards the second side wall section 12b until each hook-shaped protrusion 20 extends through its allocated hole 56. Now the force can be released from the end area 54 and the airbag package 30 decompresses until each retained edge 57 is pressed against its allocated retaining surface 23.

This mounting technique is very reliable, but has two drawbacks:
First, a quite high force is needed in order to pull the second end section over the hook shaped protrusions. Second, packing space is wasted since the airbag package necessarily decompresses towards the end of the manufacturing process.

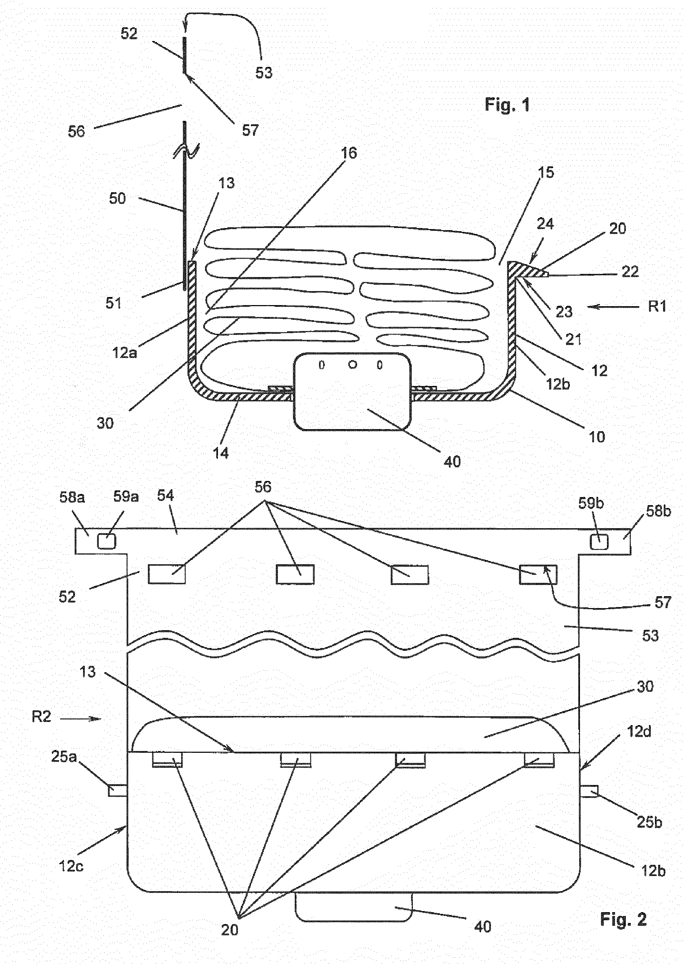

These drawbacks are overcome with an airbag module as is now described in view of Figures 1 to 6.

This airbag module is basically made like the airbag module described in view to Figures 7 to 12. In order to avoid repeating, only the differences are described now:
The most important difference is that the protrusions 20 are not hook-shaped. This means that the retaining surface 23 of each protrusion 20 extends to the free end 22 of its protrusion 20 without a barrier. Especially the complete surface of the protrusion 20 facing away from the deployment opening 15 can be flat. Preferably this flat surface extends parallel to the plane defined by the deployment opening 15 and perpendicular to the second side wall section 12b, since that leads to a minimum of decompression of the airbag package after the last manufacturing step.

The second difference is that in the preferred embodiment shown, a securing protrusion 25a, 25b extends from the third and fourth side wall section 12c, 12d respectively and that the flexible cover 50 comprises a securing hole 59a, 59b for each securing protrusion. The securing protrusions 25a, 25b extend perpendicularly to the protrusions 20. Each securing hole 59a, 59b is located in a tab 58a and 58b extending laterally from the remainder of the flexible cover 50 at the end area 54 of the second end section 52. "Laterally" means perpendicular to the direction from the first end section 51 to the second end section 52. The tabs a preferably in one piece with the remainder of the flexible cover 50.

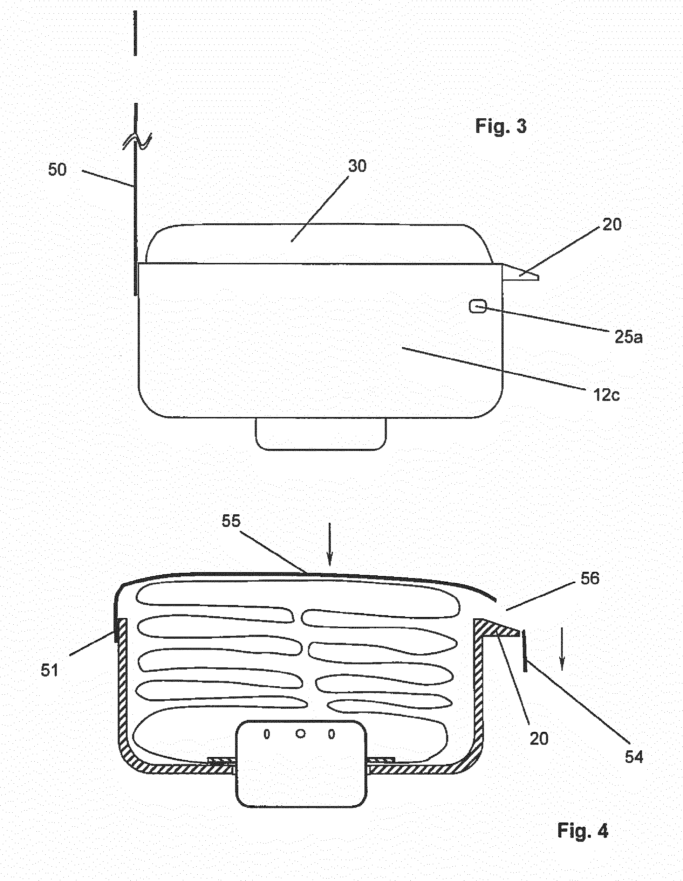

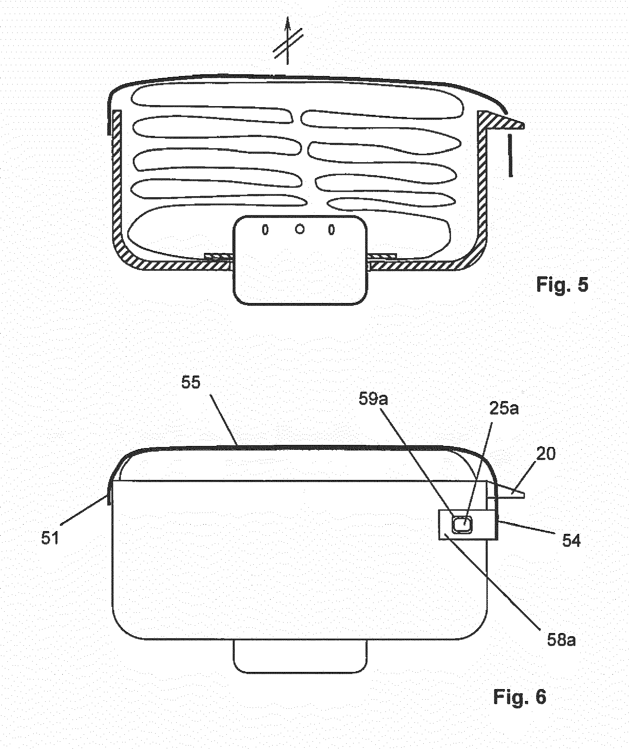

As can be seen from Figures 4 and 5 the first steps of the process of closing the flexible cover 50 are basically the same as the process described above in relation the prior art. The difference is that the retained edges 57 do not need to be pulled over a hook section, because the protrusions 20 do not have one. So, less pulling force is needed and/or no, or only a slight decompression of the airbag package 30 takes place after the second end section of the flexible cover has been secured to the container 10 via the protrusions 20.

After the step just described the tabs 58a, 58b are pulled over the securing protrusions (usually under a slight elastic deformation of the flexible cover 50) until each securing protrusion extends through its allocated securing hole. This secures the position of the second end section (and its holes 56) relative to the protrusions 20. The securing protrusions 25a, 25b are preferably also "hook-less" protrusions (like the protrusions 20 extending from the second side wall section 12a) in order to ease the mounting process. But since the securing of the flexible cover 50 - namely the tabs 58a, 58b - to the securing protrusions 25a, 25b does not contribute to the compression of the airbag package 30, whose securing protrusions 25a, 25b could also show hook-shaped free ends. Further it needs to be noted that the securing protrusions 25a, 25b do not need to extend exactly perpendicular to the protrusions 20.

In the embodiment described the first end section 51 of the flexible cover is directly connected to the container 10, namely to its first side wall section 12a, but this is only one possibility. The first end section 51 of the flexible cover 50 could for example also be attached to the gas generator unit (especially the gas generator flange or studs extending from the gas generator flange) or to the airbag. In this case the flexible cover would only span over a portion of the deployment opening.

### List of reference numbers

- 10: container
- 12: sidewall
- 12a: first sidewall section
- 12b: second sidewall section
- 12c: third sidewall section
- 12d: fourth sidewall section
- 13: upper edge
- 14: bottom
- 15: deployment opening
- 16: accommodation space
- 20: protrusion
- 21: container side end
- 22: free end
- 23: retaining surface
- 24: upper surface
- 25a, 25b: securing protrusion
- 26: hook section
- 30: airbag package
- 40: inflator
- 50: flexible cover
- 51: first end section
- 52: second end section
- 53: end edge
- 54: end area of end section
- 55: covering section
- 56: hole
- 57: retained edge
- 58a, 58b: tab
- 59a, 59b: securing hole

## Claims

1. Airbag module comprising
a container (10) having a sidewall (12) with an upper edge (13) encircling a deployment opening (15) of the container (10), said container (10) enclosing an accommodation space (16) for an airbag package (30),
an airbag package (30) being at least partially located in said accommodation space (16), and
a flexible cover (50) spanning over at least a portion of said deployment opening (15),
wherein
the flexible cover (50) comprises at least one hole (56) with a retained edge (57),
a protrusion (20) having a retaining surface (23) extends from the container (10) from a container side end (21) to a free end (22), and
said protrusion (20) extends through said hole (56) and said retained edge (57) is retained by the retaining surface (23),
wherein at least in the region of the free end (22) the retaining surface (23) extends substantially barrier-free to the free end (22) of the protrusion (20), **characterized in**
**that** additionally to the protrusion (20) at least one securing protrusion (25a, 25b) extends from the container (10), said securing protrusion (25a, 25b) having a different orientation than the protrusion (20), and
**that** the flexible cover (50) comprises additionally to the hole (56) at least one securing hole (59a, 59b),
wherein the securing protrusion (25a, 25b) extends through the securing hole (59a, 59b).

2. Airbag module according to claim 1, wherein
the sidewall (12) comprises a first section (12a) and a second section (12b) opposite the first section (12a),
the at least one protrusion (20) extends from the second section (12b),
the flexible cover (50) extends from a first end section (51) to a second end section (52) with the at least one hole (56) being located in the second end section (52).

3. Airbag module according to claim 1 or claim 2, **characterized in that** the securing hole (59a, 59b) is located in a laterally extending tab (58a, 58b) of the flexible cover (50).

4. Airbag module according to one of the preceding claims, **characterized in that** the flexible cover (50) comprises two securing holes (59a, 59b) and that two securing protrusions (25a, 25b) extend in basically opposing directions from the container (10).

5. Airbag module according to one of the preceding claims, **characterized in that** the protrusion (20) and the at least one securing protrusion (25a, 25b) are basically perpendicularly orientated.

6. Airbag module according to claim 2 or to claim 2 and one of the claims 3 to 5, wherein the deployment opening (15) has a basically rectangular shape, such that the side wall (12) additionally comprises a third sidewall section (12c) and a fourth sidewall section (12d) connecting the first sidewall section (12a) and the second sidewall section (12b) and wherein the at least one securing protrusion (25a, 25b) extends from one of the third side wall section (12c) and the fourth sidewall section (12d).

7. Airbag module according to one of the preceding claims, **characterized in that** more than one protrusion (20) extends from the container and all protrusions (20) extend parallel to each other.

8. Airbag module according to one of the preceding claims, **characterized in that** a part of the airbag package (30) extends out of the container (10) and that the flexible cover (50) applies a force to the airbag package (30) such that the airbag package (30) is compressed due to the force applied by the flexible cover.

9. Airbag module according to one of the preceding claims, **characterized in that** the retaining surface (23) is basically flat.

10. Airbag module according to claim 9, **characterized in that** the retaining surface (23) and the plane defined by the hole (56) are perpendicular to each other.

11. Airbag module according to one of the preceding claims, **characterized in that** the first end section (51) of the flexible cover (50) is connected to one of the first section (12a) of the side wall (12), a part of an inflator unit or the airbag.

## Patentansprüche

1. Airbagmodul aufweisend
einen Behälter (10) mit einer Seitenwand (12) mit einem oberen Rand (13), der eine Entfaltungsöffnung (15) des Behälters (10) umrandet, wobei der Behälter (10) einen Aufnahmeraum (16) für ein Airbagpaket (30) umschließt,
ein Airbagpaket (30), das zumindest teilweise in dem Aufnahmeraum (16) angeordnet ist, und
eine flexible Abdeckung (50), die sich über zumindest einen Teil der Entfaltungsöffnung (15) erstreckt,
wobei
die flexible Abdeckung (50) zumindest eine Öffnung (56) mit einem zurückgehaltenen Rand (57) aufweist,
sich vom Behälter (10) ein Vorsprung (20) mit einer Rückhaltefläche (23) von einem behälterseitigen Ende (21) zu einem freien Ende (22) erstreckt, und
sich der Vorsprung (20) durch die Öffnung (56) erstreckt und der zurückgehaltene Rand (57) durch die Rückhaltefläche (23) zurückgehalten wird,
wobei sich die Rückhaltefläche (23) zumindest in dem Bereich des freien Endes (22) im Wesentlichen ohne Hindernis zu dem freien Ende (22) des Vorsprungs (20) erstreckt,
**dadurch gekennzeichnet, dass**
sich zusätzlich zu dem Vorsprung (20) zumindest ein Sicherungsvorsprung (25a, 25b) von dem Behälter (10) erstreckt, wobei der Sicherungsvorsprung (25a, 25b) eine andere Orientierung als der Vorsprung (20) aufweist, und
dass die flexible Abdeckung (50) zusätzlich zu der Öffnung (56) zumindest eine Sicherungsöffnung (59a, 59b) aufweist,
wobei sich der Sicherungsvorsprung (25a, 25b) durch die Sicherungsöffnung (59a, 59b) erstreckt.

2. Airbagmodul nach Anspruch 1, wobei
die Seitenwand (12) einen ersten Abschnitt (12a) und einen dem ersten Abschnitt (12a) gegenüberliegenden zweiten Abschnitt (12b) aufweist,
sich der zumindest eine Vorsprung (20) von dem zweiten Abschnitt (12b) erstreckt,
sich die flexible Abdeckung (50) von einem ersten Endabschnitt (51) zu einem zweiten Endabschnitt (52) erstreckt, wobei die mindestens eine Öffnung (56) in dem zweiten Endabschnitt angeordnet ist.

3. Airbagmodul nach Anspruch 1 oder 2, **dadurch gekennzeichnet, dass** die Sicherungsöffnung (59a, 59b) in einer sich seitlich erstreckenden Zunge (58a, 58b) der flexiblen Abdeckung (50) angeordnet ist.

4. Airbagmodul nach einem der vorhergehenden Ansprüche, **dadurch gekennzeichnet, dass** die flexible Abdeckung (50) zwei Sicherungsöffnungen (59a, 59b) aufweist und dass sich zwei Sicherungsvorsprünge (24a, 25b) in im Wesentlichen entgegengesetzte Richtungen von dem Behälter (10) erstrecken.

5. Airbagmodul nach einem der vorhergehenden Ansprüche, **dadurch gekennzeichnet, dass** der Vorsprung (20) und der zumindest eine Sicherungsvorsprung (25a, 25b) im Wesentlichen senkrecht zueinander orientiert sind.

6. Airbagmodul nach Anspruch 2 oder nach Anspruch 2 und einem der Ansprüche 3 bis 5, wobei die Entfaltungsöffnung (15) eine im Wesentlichen rechteckige Form aufweist, so dass die Seitenwand (12) zusätzlich einen dritten Seitenwandabschnitt (12c) und einen vierten Seitenwandabschnitt (12d) aufweist, die den ersten Seitenwandabschnitt (12a) und den zweiten Seitenwandabschnitt (12b) verbinden, und wobei sich der zumindest eine Sicherungsvorsprung (25a, 25b) von dem dritten Seitenwandabschnitt (12c) oder dem vierten Seitenwandabschnitt (12d) erstreckt.

7. Airbagmodul nach einem der vorhergehenden Ansprüche, **dadurch gekennzeichnet, dass** sich mehr als ein Vorsprung (20) von dem Behälter erstreckt und dass sich alle Vorsprünge (20) parallel zueinander erstrecken.

8. Airbagmodul nach einem der vorhergehenden Ansprüche, **dadurch gekennzeichnet, dass** sich ein Teil des Airbagpakets (30) aus dem Behälter (10) erstreckt und dass die flexible Abdeckung (50) eine Kraft auf das Airbagpaket (30) ausübt, so dass das Airbagpaket (30) durch die durch die flexible Abdeckung aufgebrachte Kraft zusammengedrückt wird.

9. Airbagmodul nach einem der vorhergehenden Ansprüche, **dadurch gekennzeichnet, dass** die Rückhaltefläche (23) im Wesentlichen eben ist.

10. Airbagmodul nach Anspruch 9, **dadurch gekennzeichnet, dass** die Rückhaltefläche (23) und die durch die Öffnung (56) definierte Ebene senkrecht zueinander stehen.

11. Airbagmodul nach einem der vorhergehenden Ansprüche, **dadurch gekennzeichnet, dass** der erste Endabschnitt (51) der flexiblen Abdeckung (50) mit dem ersten Abschnitt (12a) der Seitenwand (12), einem Teil eines Gasgenerators oder dem Airbag verbunden ist.

## Revendications

1. Module de coussin gonflable de sécurité, comprenant
un contenant (10) ayant une paroi latérale (12) comportant un bord supérieur (13) entourant une ouverture de déploiement (15) du contenant (10), ledit contenant (10) enfermant un espace de logement (16) pour un paquet (30) de coussin gonflable de sécurité,
un paquet (30) de coussin gonflable de sécurité étant au moins partiellement disposé dans ledit espace de logement (16), et
une enveloppe souple (50) recouvrant au moins une portion de ladite ouverture de déploiement (15),
dans lequel
l'enveloppe souple (50) comprend au moins un trou (15) comportant un bord retenu (57),
une saillie (20) ayant une surface de retenue (23) s'étend du contenant (10) à une extrémité libre (22) à partir d'une extrémité latérale (21) du contenant,
et ladite saillie (20) s'étend par ledit trou (56), et ledit bord retenu (57) est retenu par la surface de retenue (23),
dans lequel au moins dans la région de l'extrémité libre (22) la surface de retenue (23) s'étend sensiblement sans barrière jusqu'à l'extrémité libre (22) de la saillie (20),
**caractérisé en ce que**
en plus de la saillie (20), au moins une saillie de fixation (25a, 25b) s'étend à partir du contenant (10), ladite saillie de fixation (25a, 25b) ayant une orientation différente de celle de la saillie (20), et
**en ce que** l'enveloppe souple (50) comprend, en plus du trou (56), au moins un trou de fixation (59a, 59b),
la saillie de fixation (25a, 25b) traversant le trou de fixation (59a, 59b).

2. Module de coussin gonflable de sécurité selon la revendication 1, dans lequel
la paroi latérale (12) comprend une première section (12a) et une seconde section (12b) opposée à la première section (12a),
l'au moins une saillie (20) s'étend à partir de la seconde section (12b),
l'enveloppe souple (50) s'étend d'une première section d'extrémité (51) à une seconde section d'extrémité (52), l'au moins un trou (56) étant situé dans la seconde section d'extrémité (52).

3. Module de coussin gonflable de sécurité selon la revendication 1 ou la revendication 2, **caractérisé en ce que** le trou de fixation (59a, 59b) est situé dans une patte s'étendant latéralement (58a, 58b) de l'enveloppe souple (50).

4. Module de coussin gonflable de sécurité selon l'une des revendications précédentes, **caractérisé en ce que** l'enveloppe souple (50) comprend deux trous de fixation (59a, 59b), et **en ce que** deux saillies de fixation (25a, 25b) s'étendent dans des directions fondamentalement opposées à partir du contenant (10).

5. Module de coussin gonflable de sécurité selon l'une des revendications précédentes, **caractérisé en ce que** la saillie (20) et l'au moins une saillie de fixation (25a, 25b) sont fondamentalement orientées perpendiculairement.

6. Module de coussin gonflable de sécurité selon la revendication 2, ou selon la revendication 2 et l'une des revendications 3 à 5, dans lequel l'ouverture de déploiement (15) présente une forme fondamentalement rectangulaire, de telle sorte que la paroi latérale (12) comprend en outre une troisième section de paroi latérale (12c) et une quatrième section de paroi latérale (12d) reliant la première section de paroi latérale (12a) et la deuxième section de paroi latérale (12b), et l'au moins une saillie de fixation (25a, 25b) s'étendant à partir de la troisième section de paroi latérale (12c) ou de la quatrième section de paroi latérale (12d).

7. Module de coussin gonflable de sécurité selon l'une des revendications précédentes, **caractérisé en ce que** plus d'une saillie (20) s'étend à partir du contenant, et que toutes les saillies (20) s'étendent parallèlement les unes aux autres.

8. Module de coussin gonflable de sécurité selon l'une des revendications précédentes, **caractérisé en ce qu'**une partie du paquet (30) de coussin gonflable de sécurité s'étend vers l'extérieur du contenant (10), et **en ce que** l'enveloppe souple (50) applique une force au paquet (30) de coussin gonflable de sécurité de telle sorte que le paquet (30) de coussin gonflable de sécurité soit comprimé du fait de la force appliquée par l'enveloppe souple.

9. Module de coussin gonflable de sécurité selon l'une des revendications précédentes, **caractérisé en ce que** la surface de retenue (23) est fondamentalement plane.

10. Module de coussin gonflable de sécurité selon la revendication 9, **caractérisé en ce que** la surface de retenue (23) et le plan défini par le trou (56) sont perpendiculaires l'une à l'autre.

11. Module de coussin gonflable de sécurité selon l'une des revendications précédentes, **caractérisé en ce que** la première section d'extrémité (51) de l'enveloppe souple (50) est reliée à la première section (12a) de la paroi latérale (12), ou à une partie d'une unité de gonflage, ou au coussin gonflable de sécurité.
